# EUROPEAN PATENT SPECIFICATION

(11) **EP 2 381 528 B1**
(45) Date of publication and mention of the grant of the patent: **08.11.2017**
(21) Application number: 10194385.0
(22) Date of filing: 09.12.2010
(51) Int. Cl.: H01Q 1/52, G06K 7/10, H01Q 1/22

(54) **Cap assembly**
Kappenanordnung
Assemblage de chapeau

(30) Priority: 23.04.2010 US 766264
(43) Date of publication of application: 26.10.2011
(73) Proprietor: Psion Inc., Mississauga, ON L5N 7J9 (CA)
(72) Inventor: Chirla, Laurian P., Irvine, CA 921614 (US); Roy, Iain C., Mississauga Ontario L5N 7J9 (CA)
(74) Representative: LKGLOBAL Lorenz & Kopf PartG mbB Patentanwälte

(56) References cited:
- US-A- 5 555 459
- US-A1- 2007 007 353
- US-B1- 6 195 053

## Description

The present invention relates to a cap assembly. More specifically, the present invention relates to a cap assembly which is attachable to a main housing, such as that of a handheld device.

As is known, in a handheld device such as a computer terminal, smartphone, PDA, etc., the device can contain a number of electronic components providing a variety of functionalities and the electromagnetic fields which are generated by these components can affect the functioning of other such components. This problem is particularly acute in a handheld device because, due to space limitations, a relatively large number of electronic components typically are mounted in the housing of the device in close proximity to each other.

The housing of such handheld devices typically include a main housing portion, in which most of the components are located, and a cap portion, in which certain components are located. The cap portion may include, for example, a WAN (wide area network) antenna and a scanner module, or imager. Depending on the user's requirements however, different WAN antennas may be used in particular handheld devices, e.g., to meet a particular user's specifications. Similarly, it may be necessary to use a variety of scanner modules or imagers in different handheld devices for different customers having different requirements. However, detuning of the WAN antenna sometimes results when the scanner or imager is incompatible with the WAN antenna. Costs are then incurred in retuning the WAN antenna.

For the foregoing reasons, there is a need for a cap assembly which overcomes or mitigates one or more of the disadvantages of the prior art.

US-A1-2007/0007353 (Danielson Arvin D et al) provides a portable hand-held data processing assembly. A separate data collection and communications module can clip onto the back surface of the upper half of the data terminal. Protruding from the top of the separate data collection and communications module is an external antenna. An analogue circuit board may be provided within the separate data collection and communications module. The analogue circuit board has two inner conductive planes, which provide ground and interconnection planes for the components on the respective outer surfaces of the circuit board.

US-B1-6195053 (Kodukula et al.) provides an optical reading assembly in a reading assembly housing. An antenna is shaped to conform to at least a portion of the reading assembly housing, and to be in contact with the reading assembly housing. The antenna may thereby be formed so as to utilize the space adjacent to the optical reading assembly to conserve space. The antenna may utilize the structure of the optical character set reading assembly so that the need for a separate support and housing is eliminated.

US-B1-5555459 (Kraus et al.) provides an antenna for a handheld RF transceiver terminal. The antenna is mounted above a module, and is encapsulated by material which does not detrimentally affect its antenna performance. The module may be connected to the rear surface of the handheld RF transceiver terminal.

### Summary

In accordance with the invention, an apparatus comprising the features of appended claim 1 is provided. The dependent claims provide further details of embodiments of the invention.

The present invention provides flexibility in internal and/or external antenna usage, interchangeability between different scanners, and modularity. In a broad aspect, the invention provides a cap assembly according to claim 1. In another aspect of the invention, the electromagnetic shield at least partially includes conductive material electrically connected to grounding means, for electrically grounding the electromagnetic shield.

In yet another aspect of the invention there is provided a handheld device including a main housing and a cap assembly attachable to the main housing. The cap assembly includes a body at least partially defining one or more cavities therein, and one or more WAN antennas receivable in the cavity or cavities. The handheld device also includes an electromagnetic shield receivable in the cavity for providing each WAN antenna with a substantially predetermined electromagnetic environment in which the impedances of the WAN antenna and the electromagnetic shield are substantially matched.

In another aspect, the invention provides an electromagnetic shield for use in a handheld device comprising one or more WAN antennas and one or more scanners. The electromagnetic shield includes a conductive material electrically connected to grounding means in the handheld device, the conductive material being positioned between the scanners and the WAN antenna, and the conductive material and each WAN antenna having substantially matched impedances for providing each WAN antenna with a substantially predetermined electromagnetic environment relative to the scanners.

The invention will be better understood with reference to the attached drawings, in which:
Fig. 1 is a top view, partially cut away, of a handheld device in accordance with the present invention;
Fig. 2 is an isometric view of an embodiment of a shield element of the device of Fig. 1;
Fig. 3 is a perspective view of the side and end an electromagnetic shield of the present invention;
Fig. 4 is an end view of the electromagnetic shield of Fig. 3;
Fig. 5 is a perspective view of the end and side of the electromagnetic shield of Fig. 3;
Fig. 6 is a perspective end view of the electromagnetic shield of Fig. 3 positioned in an embodiment of a WAN antenna support element;
Fig. 7 is a perspective view of the end and front of the electromagnetic shield and the WAN antenna support element of Fig. 6;
Fig. 8 is another perspective view of the front, end and side of the electromagnetic shield and the WAN antenna support element of Fig. 6;
Fig. 9 is a front view of an embodiment of the main housing of a handheld device in accordance with the present invention with the electromagnetic shield of Fig. 3 attached thereto;
Fig. 10 is an isometric view of the electromagnetic shield and the main housing of Fig. 9;
Fig. 11 is a perspective view isometric view of the front and side of the electromagnetic shield and the main housing of Fig. 9;
Fig. 12 is a front view of the electromagnetic shield and the main housing of Fig. 9 with the WAN antenna support element positioned on the main housing;
Fig. 13 is a front view of the handheld unit with an embodiment of a cover element of the invention mounted to the WAN antenna support element;
Fig. 14 is schematic illustration representing an embodiment of a resilient connector of the invention connecting the electromagnetic shield and the grounding means;
Fig. 15 is a top view, partially cut away, of an alternative embodiment of a handheld device of the invention; and
Fig. 16 is an isometric view of an alternative embodiment of a shield element of the invention.

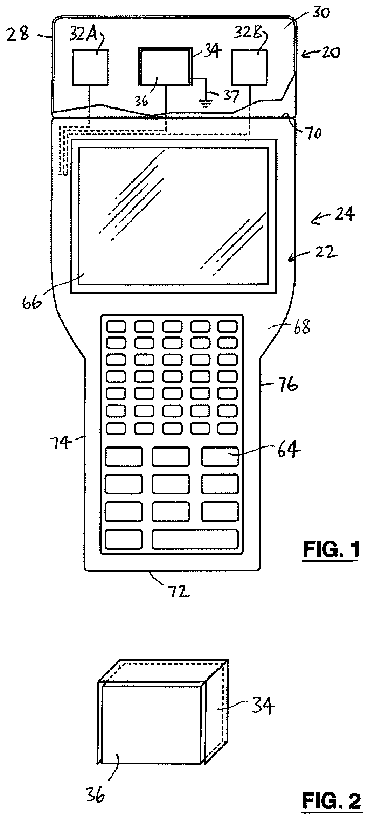

In the attached drawings, like reference numerals designate corresponding elements throughout. Reference is first made to Figs. 1-14 in which a cap assembly for a handheld device, in accordance with the present invention, is indicated generally at 20. The cap assembly 20 is attachable to a main housing 22 of a handheld device 24 and cap assembly 20 preferably includes a cap body 28 at least partially defining one or more cavities 30 therein and includes one or more WAN antennas 32 receivable in the cavity 30.

The cap assembly 20 preferably also includes an electromagnetic shield 34 receivable in the cavity 30, for providing the WAN antennas 32 with a substantially predetermined electromagnetic environment in which the impedances of the WAN antenna 32 and the electromagnetic shield 34 are substantially matched.

As can best be seen in Fig. 1, the handheld device 22 preferably includes a keyboard 64 and a display 66, which may be positioned in or on a top surface 68 of the main housing 22. The main housing 22 preferably includes a front side 70, an opposed back side 72, and left and right sides 74, 76. As shown in Fig. 1, it is preferred that the cap assembly 20 be mounted to the main housing 22, as will be described. However, those skilled in the art will appreciate that the cap assembly may be mounted to the main housing 22 in any way desired, instead of the cap assembly 20 being mounted to the front side 70 of the main housing 22 (as shown in Fig. 1), e.g., the cap assembly 20 could be mounted to one of the sides 74, 76 or back side 72.

The cap assembly 20 may or may not include one or more scanners 36, depending on the functions which the handheld device 24 is required to perform. For the purposes hereof, a scanner can be a bar code scanner (for 1 dimensional barcodes or the like) or an imager (for reading a two-dimensional bar code or the like).

In one embodiment, the cap assembly 20 also includes the scanner 36 receivable in the cavity 30. Preferably, the electromagnetic shield 34 is positioned at least partially between the scanner 36 and the WAN antenna 32.

As can be seen in Fig. 1, in one embodiment, the cap assembly 20 preferably includes two WAN antennas, identified in Fig. 1 for illustrative purposes by reference numerals 32A and 32B respectively. In the cap assembly 20 shown in Fig. 1, the electromagnetic shield 34 is positioned between the WAN antennas 32A, 32B, and the scanner 36 is positioned inside the electromagnetic shield 34. It will be understood that the cap assembly 20 may include only one WAN antenna 32, or it may include two or more WAN antennas 32, depending on system requirements.

Preferably, the electromagnetic shield 34 at least partially includes conductive material electrically connected to grounding means 37, for electrically grounding the electromagnetic shield 34. Any suitable conductive material may be used. For instance, any metallic or ferromagnetic material(s) is a suitable conductive material. As an example, it has been determined that solder-tin plated steel, approximately 2.5mm (0.010 inch) thick, is a suitable material but a wide range of other materials, as will occur to those of skill in the art, can be employed, including copper or aluminium sheeting, etc., although it is preferred that a ferromagnetic material be employed.

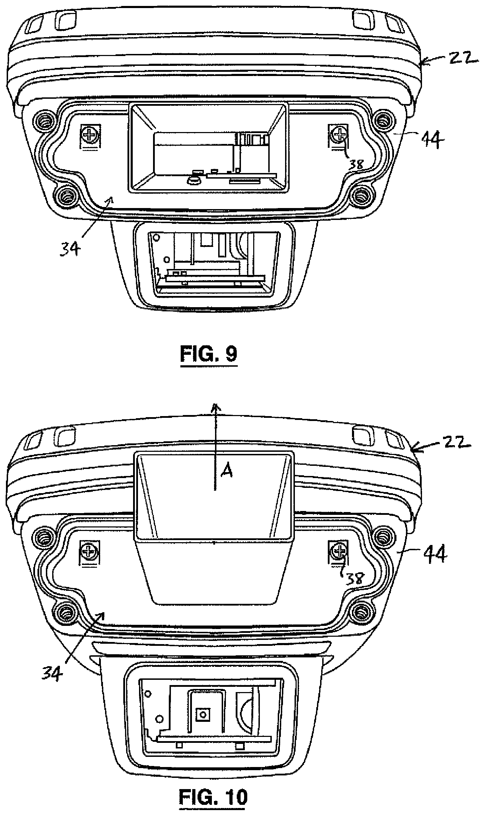

As can be seen in Figs. 9-11, the electromagnetic shield 34 preferably is mounted to the main housing 22. The electromagnetic shield 34 may be attached to the main housing 22 by any suitable means. For instance, and as shown in Figs. 9-11, the electromagnetic shield 34 can be attached to the main housing by suitable fasteners 38, such as screws.

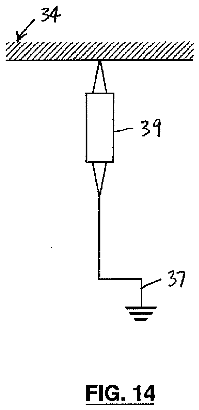

In one embodiment, the electromagnetic shield 34 preferably is at least partially attached to the main housing 22 by resilient connectors 39, for maintaining the electrical connection between the electromagnetic shield 34 and the grounding means 37 (Fig. 14). The resilient connectors 39 provide resilient mounting, so that the connection is maintained when the device is subjected to shock or vibration, e.g., if the device is dropped. The resilient connector preferably is any suitable connector. For example, the resilient connector may be a suitable Pogo™ pin, as sold by Everett Charles Technologies, 700 E Harrison Ave Pomona , CA, USA 91767, or any other suitable connector as will occur to those of skill in the art.

As is well known in the art, scanner (i.e., a scanner or an imager, as described above) may be one of a wide variety of devices for capturing digital information. In the case of a bar code scanner, for instance, laser light beams are directed from the scanner toward a target bar code and are moved along the bar code, in a predetermined path. The reflected laser beam light is received by the scanner and is processed to determine the digital information embodied in the bar code. As another example, in the case wherein the scanner is an imager, light reflected from an object is sensed by light sensors in the imager. The light may be ambient light, or may be supplied from a light source associated with the imager. The received reflected light is processed by the light sensors in the imager to determine the digital information in the 1D or 2D bar code, or other object, that was imaged.

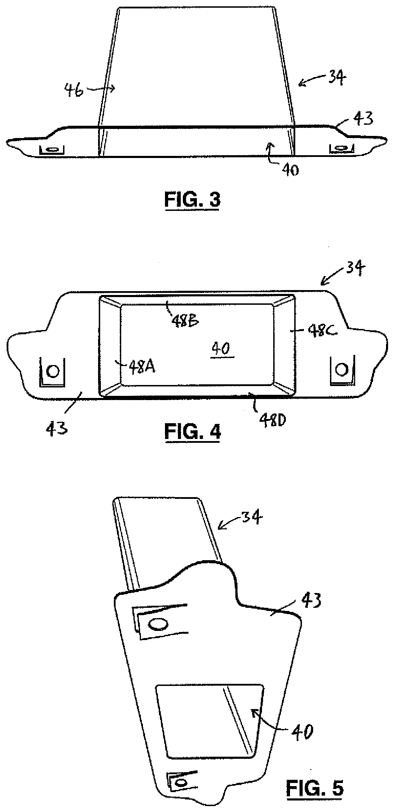

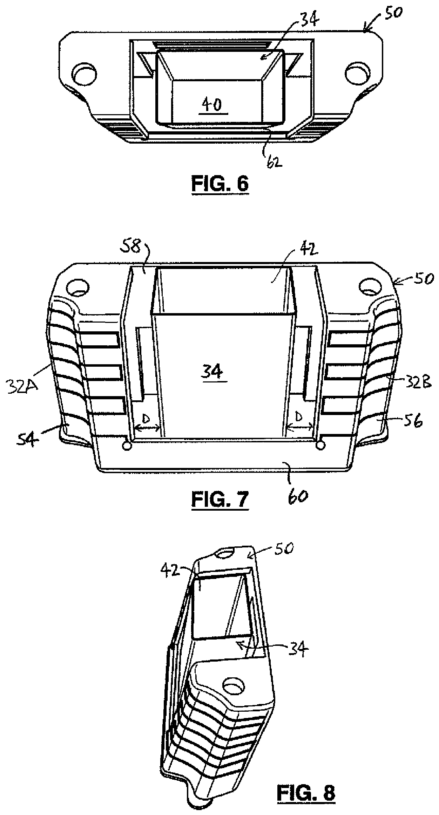

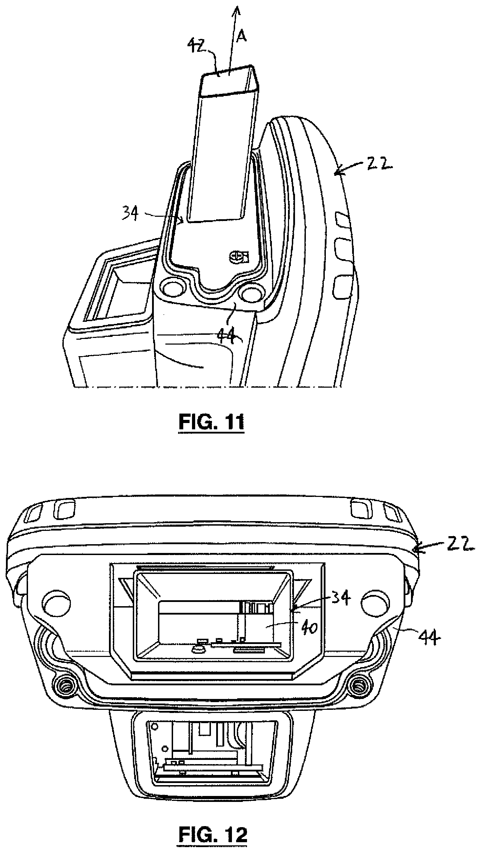

In one embodiment, the electromagnetic shield 34 preferably at least partially defines a pocket 40 in which the scanner 36 is receivable (best seen in Figs. 3-5). It is also preferred that the electromagnetic shield 34 includes an opening 42 (best seen in Figs. 7 and 11) through which light (e.g. laser beams) and/or images are transmittable. As can be seen in Fig. 11, the opening 42 is oriented to provide at least one path for light to be transmitted between the scanner 36 and the target.

It will be understood that the position of the shield 34 and the opening 42 relative to the main housing 22 as shown in Fig. 1 (i.e., in which the scanner 36 is positioned to transmit and/or receive light upwardly out of the page), in a direction substantially orthogonally to the top surface 68 of the main housing 22) is merely for illustrative purposes. In a preferred embodiment, electromagnetic shield 34 and the opening 42 defined thereby are positioned as illustrated in Figs. 9-12 which show the cap assembly 20 in which the scanner 36 (not shown in Figs. 9-12) is positioned to direct and/or receive light substantially orthogonally to the front side 70 of the main housing 22, although it is contemplated that other orientations may be preferred in some applications and configurations which such other orientations are intended to be within the scope of the present invention.

In one embodiment, the electromagnetic shield 34 preferably includes a base element 43 (best seen in Figs. 3-5). Preferably, the base element 43 is formed to engage a portion, such as front wall 44, of the main housing 22 when the electromagnetic shield 34 is attached to the main housing 22. As can be seen in Figs. 3-5, the electromagnetic shield 34 preferably also includes a can element 46 secured to, or integrally formed with, the base element 43. Preferably, sides 48 of the can element 46 define the pocket 40. Those skilled in the art will appreciate that many different arrangements of the walls 48 are possible. As can be seen in Fig. 4, in one embodiment, the can element 46 includes four walls (designated 48A-48D in Fig. 4 for illustrative purposes) defining a generally quadrilateral pocket 40, but other numbers of walls 48 and/or other shapes can be employed as desired. Preferably, the base element 43 is attached to the wall 44 by the fasteners 38.

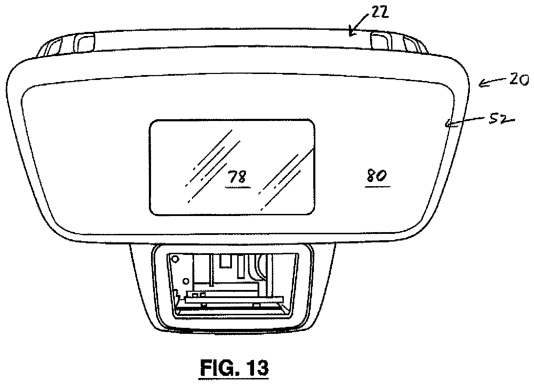

In one embodiment, the handheld device 20 preferably also includes a WAN antenna support element 50 (Figs. 6-9 and 12). The WAN antenna support element 50 is adapted to support a cover 52 in a preselected position (Fig. 13). The WAN antenna support element 50 preferably includes side portions 54, 56 connected by top and bottom connecting pieces 58, 60 which at least partially define an aperture 62 between the side portions 54, 56 in which the can element 46 is receivable (Figs. 6, 7). As can be seen in Figs. 6 and 7, the side portions 54, 56 preferably are positioned so that, when the WAN antenna support element 50 is positioned on the can element 46 (i.e., when the can element 46 is received in the space 62), the side portions 54, 56 of the WAN antenna support element 50 are spaced apart from the sides 48 of the can element 46 by a predetermined distance "D" (Fig. 7). In Figs. 6-8, WAN antennas (identified as 32A and 32B for illustrative purposes) are shown positioned on the side portions 54, 56. Those skilled in the art will appreciate that many different arrangements are possible, and the design, positioning and size of the WAN antennas 32A, 32B as shown in Figs. 6-8 is exemplary only.

The cover 52 preferably is made of any suitable material or materials. In one embodiment, shown in Fig. 13, the cover 52 preferably includes a window portion 78 held in position by a body portion 80 of the cover 52. It will be understood that the window portion 78 preferably includes any suitable light-transmitting material, through which light passing between the scanner 36 and the target (not shown) is transmittable. For instance, the light-transmitting material may be a transparent or translucent piece of any suitable plastic material.

As indicated above, the cap assembly 20 may not include a scanner 36, or one or more scanners 36 may be positioned in the cap assembly 20, which may be mounted in the cap assembly 20 as required. In use, because the impedances of the WAN antenna and the electromagnetic shield 34 are substantially matched, then regardless of whether or not the cap assembly 20 includes the scanner 36 inside the electromagnetic shield 34, a substantially constant electromagnetic environment is provided to the WAN antenna(s) in the cap assembly 20.

In this manner, the electromagnetic shield 34 provides modularity, allowing flexibility in manufacturing the handheld device for different applications, resulting in lower manufacturing costs.

Accordingly, due to the electromagnetic shield 34, a variety of scanners (or no scanner, as the case may be) may be utilized in handheld devices 24 without requiring changes in the WAN antennas 32, i.e., to account for the different electromagnetic environments. This configuration allows for modularity of the handheld device 24, i.e., different configurations of WAN antennas 32 and/or scanner 36 can be selected if the scanner 36 is positioned inside the electromagnetic shield 34.

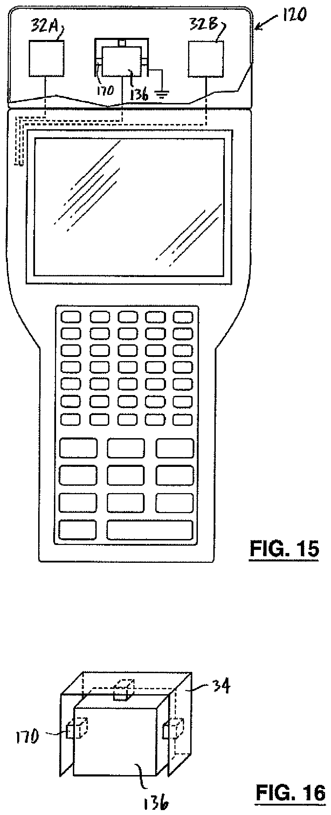

The scanner 36 may be provided in a variety of configurations, i.e., with different physical dimensions. For instance, certain versions of a scanner 136 having a significantly smaller size are shown in Fig. 15 and 16. Accordingly, another embodiment of the cap assembly 120 of the invention preferably includes one or more spacers 170 which are for securely positioning the smaller scanner 136 in the pocket 40. The spacers 170 may be made of any suitable material, and positioned in the pocket 40 between the scanner and the electromagnetic shield 34 in any suitable manner. Preferably, the spacers 170 are formed of any suitable rigid or semi-rigid conductive material. For example, those skilled in the art would be aware of electromagnetic interference ("EMI") gaskets, which are suitable.

It will be appreciated by those skilled in the art that the invention can take many forms, and that such forms are within the scope of the invention as described above. The foregoing descriptions are exemplary and their scope should not be limited to the preferred versions contained herein.

## Claims

1. A cap assembly (20, 120) arranged to be attached to a housing (22) of a handheld device (24), the cap assembly (20, 120) comprising:
1.1 a cap body (28) at least partially defining at least one cavity (30) therein;
1.2 a first Wide Area Network, WAN, antenna (32A) and a second WAN antenna (32B), the first and second WAN antennas (32A, 32B) arranged to be received in said at least one cavity (30); and
1.3 an electromagnetic shield (34) defining a pocket (40) having sidewalls (48), wherein the pocket (40) is arranged to receive at least one scanner (36), and the electromagnetic shield (34) is arranged to be received in said at least one cavity (30) for providing said first and second WAN antennas (32A, 32B) with a substantially constant electromagnetic environment, with respect to a presence or absence of the at least one scanner (36) in the electromagnetic shield (34), in which the impedances of the first and second WAN antennas (32A, 21B) and the electromagnetic shield (34) are matched,
1.4 wherein opposite sidewalls of the pocket (40) are positioned at least partially between the location in the pocket (40) where the at least one scanner (36) is arranged to be received and the respective first and second WAN antennas (32A, 32B).

2. A cap assembly (20, 120) according to claim 1, in which the electromagnetic shield (34) at least partially comprises conductive material electrically connected to an electrical ground (37).

3. A cap assembly (20, 120) according to claim 1 or claim 2, in which the electromagnetic shield (34) is arranged to be mounted to the housing (22).

4. A cap assembly (20, 120) according to claim 3, in which the electromagnetic shield (34) is arranged to be at least partially attached to the housing (22) by resilient connectors (39), for maintaining the electrical connection between the electromagnetic shield (34) and the electrical ground.

5. A cap assembly (20, 120) according to any preceding claim, in which the electromagnetic shield (34) comprises an opening (42) through which light is transmittable.

6. A cap assembly (20, 120) according to any preceding claim, additionally comprising at least one spacer element (170) for securely positioning said scanner in the pocket (40) in the electromagnetic shield (34).

7. A handheld device (24) comprising:
a housing (22) arranged to be attached with the cap assembly (20, 120) of claim 1.

## Patentansprüche

1. Kappenanordnung (20, 120), angeordnet, um an einem Gehäuse (22) eines Handgeräts (24) befestigt zu sein, wobei die Kappenanordnung (20, 120) Folgendes umfasst:
1.1 einen Kappenkörper (28), der wenigstens teilweise wenigstens einen Hohlraum (30) darin definiert;
1.2 eine erste WAN(Wide Area Network)-Antenne und eine zweite WAN-Antenne (32B), wobei die erste und die zweite WAN-Antenne (32A, 32B) angeordnet sind, in dem wenigstens einen Hohlraum (30) aufgenommen zu werden;
und
1.3 eine elektromagnetische Abschirmung (34), die ein Fach (40) mit Seitenwänden (48) definiert, wobei das Fach (40) angeordnet ist, wenigstens einen Scanner (36) aufzunehmen, und die elektromagnetische Abschirmung (34) angeordnet ist, in dem wenigstens einen Hohlraum (30) aufgenommen zu werden, um die erste und die zweite WAN-Antenne (32A, 32B) mit einer im Wesentlichen konstanten elektromagnetischen Umgebung bezogen auf ein Vorhandensein oder Fehlen des wenigstens einen Scanners (36) in der elektromagnetischen Abschirmung (34) zu versehen, wobei die Impedanzen der ersten und der zweiten WAN-Antenne (32A, 21B) und der elektromagnetischen Abschirmung (34) abgestimmt sind,
1.4 wobei einander gegenüberliegende Seitenwände des Fachs (40) wenigstens teilweise zwischen der Stelle in dem Fach (40), an der der wenigstens eine Scanner (36) angeordnet ist, aufgenommen zu werden, und der jeweiligen ersten und zweiten WAN-Antenne (32A, 32B) platziert sind.

2. Kappenanordnung (20, 120) nach Anspruch 1, wobei die elektromagnetische Abschirmung (34) wenigstens teilweise leitfähiges Material umfasst, das elektrisch mit einer elektrischen Masse (37) verbunden ist.

3. Kappenanordnung (20, 120) nach Anspruch 1 oder 2, wobei die elektromagnetische Abschirmung (34) angeordnet ist, an dem Gehäuse (22) angebaut zu sein.

4. Kappenanordnung (20, 120) nach Anspruch 3, wobei die elektromagnetische Abschirmung (34) angeordnet ist, durch elastische Verbinder (39) wenigstens teilweise an dem Gehäuse (22) befestigt zu sein, um die elektrische Verbindung zwischen der elektromagnetischen Abschirmung (34) und der elektrischen Masse aufrechtzuerhalten.

5. Kappenanordnung (20, 120) nach einem der vorhergehenden Ansprüche, wobei die elektromagnetische Abschirmung (34) eine Öffnung (42) umfasst, durch die Licht übertragbar ist.

6. Kappenanordnung (20, 120) nach einem der vorhergehenden Ansprüche, zusätzlich umfassend wenigstens ein Abstandhalterelement (170) zum sicheren Positionieren des Scanners in dem Fach (40) in der elektromagnetischen Abschirmung (34).

7. Handgerät (24), Folgendes umfassend:
ein Gehäuse (22), das angeordnet ist, mit der Kappenanordnung (20, 120) nach Anspruch 1 befestigt zu sein.

## Revendications

1. Un ensemble (20, 120) formant coiffe, agencé pour être fixé à un boîtier (22) d'un dispositif portable (24), l'ensemble formant coiffe (20, 120) comprenant :
1.1 un corps de coiffe (28) définissant au moins partiellement au moins une cavité (30) à l'intérieur de lui ;
1.2 un premier réseau étendu, WAN, une antenne (32A) et une deuxième antenne (32B) WAN, les première et deuxième antennes WAN (32A, 32B) étant agencées pour être reçues dans ladite au moins une cavité (30) ;
et
1.3 un écran électromagnétique (34) définissant une poche (40) comportant des parois latérales (48), la poche (40) étant agencée pour recevoir au moins un scanner (36), et l'écran électromagnétique (34) étant agencé pour être reçu dans ladite au moins une cavité (30) afin de fournir auxdites première et deuxième antennes WAN (32A, 32B) un environnement électromagnétique sensiblement constant à l'égard de la présence ou de l'absence dudit au moins un scanner (36) dans l'écran électromagnétique (34), les impédances des première et deuxième antennes WAN (32A, 21B) et de l'écran électromagnétique (34) étant en adéquation,
1.4 des parois latérales opposées de la poche (40) étant positionnées au moins partiellement entre l'emplacement dans la poche (40) dans lequel ledit au moins un scanner (36) est destiné à être reçu et les première et deuxième antennes WAN (32A, 32B) respectives.

2. Un ensemble formant coiffe (20, 120) selon la revendication 1, dans lequel l'écran électromagnétique (34) comprend au moins partiellement un matériau conducteur relié électriquement à une mise à la terre (37).

3. Un ensemble formant coiffe (20, 120) selon la revendication 1 ou la revendication 2, dans lequel l'écran électromagnétique (34) est agencé pour être monté sur le boîtier (22).

4. Un ensemble formant coiffe (20, 120) selon la revendication 3, dans lequel l'écran électromagnétique (34) est agencé pour être au moins partiellement fixé au boîtier (22) par des connecteurs élastiques (39) pour maintenir la connexion électrique entre l'écran électromagnétique (34) et la mise à la terre.

5. Un ensemble formant coiffe (20, 120) selon l'une quelconque des revendications précédentes, dans lequel l'écran électromagnétique (34) comprend une ouverture (42) à travers laquelle de la lumière est transmissible.

6. Un ensemble formant coiffe (20, 120) selon l'une quelconque des revendications précédentes, comprenant en outre au moins un élément d'écartement (170) pour positionner de manière sûre ledit scanner dans la poche (40) dans l'écran électromagnétique (34).

7. Un dispositif portable (24) comprenant :
un boîtier (22) agencé pour être fixé avec l'ensemble formant coiffe (20, 120) selon la revendication 1.
